# EUROPÄISCHE PATENTSCHRIFT

(11) **EP 1 241 395 B1**
(45) Veröffentlichungstag und Bekanntmachung des Hinweises auf die Patenterteilung: **14.12.2005**
(21) Anmeldenummer: 02002943.5
(22) Anmeldetag: 11.02.2002
(51) Int. Cl.: F16L 59/02, C03B 1/00, C03C 13/06

(54) **Verfahren zur Herstellung von Dämmstoffen aus Mineralfasern**
Method of manufacturing insulating material based on mineral fibers
Procédé de fabrication de matériaux isolants en fibres minérales

(30) Priorität: 21.02.2001 DE 10108111; 21.09.2001 DE 10146614
(43) Veröffentlichungstag der Anmeldung: 18.09.2002
(73) Patentinhaber: Deutsche Rockwool Mineralwoll GmbH & Co. OHG, 45966 Gladbeck (DE)
(72) Erfinder: Binderup Hansen, Peter F., 3520 Farum (DK); Happe, Andreas, 45143 Essen (DE); Nykiel, Guido, 45966 Gladbeck (DE)
(74) Vertreter: Wanischeck-Bergmann, Axel

(56) Entgegenhaltungen:
- WO-A-00/76929
- WO-A-88/06572
- WO-A-99/28246
- WO-A-99/28252

## Beschreibung

Die Erfindung betrifft ein Verfahren zur Herstellung von Dämmstoffen aus Mineralfasern, insbesondere aus Glas- und/oder Steinwolle, bei dem in einem Schmelzaggregat, insbesondere einem Kupolofen, eine silikatische Schmelze hergestellt und in einer Zerfaserungseinrichtung in vorzugsweise mikrofeine Fasern zerfasert wird, den Fasern vorzugsweise Binde- und/oder Imprägnierungsmittel zugesetzt werden und die Fasern auf einer Fördereinrichtung als Vlies abgelegt werden.

Dämmstoffe aus Mineralfasern werden aus silikatischen Schmelzen hergestellt. Hierzu wird ein silikatisches Ausgangsmaterial, beispielsweise Gläser, natürliches oder künstliches Gestein einem Schmelzaggregat, beispielsweise einem Kupolofen oder einem Schachtofen zugeführt. Die hieraus gewonnene silikatische Schmelze wird sodann einem Zerfaserungsaggregat zugeführt, in dem die silikatische Schmelze in mikrofeine Mineralfasern zerfasert wird. Die sodann einer Sammelkammer zugeleiteten Mineralfasern werden in der Regel mit Binde- und/oder Imprägnierungsmitteln benetzt und auf einer unterhalb der Sammelkammer angeordneten Fördereinrichtung, in der Regel handelt es sich hierbei um ein Förderband, abgelegt. Die mit Binde- und/oder Imprägniermitteln benetzten Mineralfasern bilden auf dem Fördermittel ein Mineralfaservlies, welches in nachgeschalteten thermischen und/oder mechanischen Einrichtungen in an sich bekannter Weise bearbeitet wird, um Dämmstoffe in Form von Bahnen, Platten, Formkörpern oder dergleichen herzustellen. Demzufolge bestehen Mineralfaser-Dämmstoffe aus glasig erstarrten Fasern, die mit geringen Bindemitteln punktweise miteinander verbunden sind.

Bei den Dämmstoffen aus Mineralfasern werden solche aus Glaswolle von solchen aus Steinwolle unterschieden. Mineralfaser-Dämmstoffe aus Glaswolle werden aus silikatischen Schmelzen mit relativ hohe Anteilen an Netzwerkwandlern, insbesondere Alkalien und Bor hergestellt. Die Rohstoffe werden in öl- oder gasbefeuerten Wannenöfen aufgeschmolzen. Die Zerfaserung erfolgt beispielsweise mit Hilfe des sogenannten TEL-Verfahrens, bei dem die Schmelze unter Einwirkung von Fliehkräften durch Öffnungen in den Wandungen eines rotierenden Körpers geleitet wird. Mit diesem Verfahren werden relativ lange und glatte Fasern erzeugt.

Steinwolle-Dämmstoffe wurden ursprünglich aus Gesteinen, wie Diabas, Basalt und Kalkstein, Dolomit erschmolzen. Zwischenzeitlich ist man vermehrt dazu übergangen, diese natürlichen Gesteine durch künstliche Gesteine zu ersetzen oder zusammen mit künstlichen Gesteinen dem Schmelzvorgang zuzuführen. In diesen künstlichen Gesteinen werden insbesondere Abfälle der Produktion verarbeitet, wobei die Abfälle auch aus erstarrten Schmelzen bestehen können, die bei der regelmäßigen Entleerung des Schmelzaggregats anfallen. Neben diesen Abfällen werden auch fehlerbehaftete Produktionschargen verarbeitet. Die Abfälle werden in einem ersten Schritt zerkleinert, anschließend mit Portlandzement als Bindemittel und Gesteinssplitt vermischt und schließlich zu künstlichen Gesteinen, sogenannten Formsteinen gepresst.

Die grobkörnigen Gesteine und/oder die entsprechend geformten Formsteine werden zusammen mit grobstückigem Koks als Primärenergieträger in das Schmelzaggregat, in der Regel in den Kupolofen eingefüllt. Weiterhin werden Zuschläge zugegeben, die ein Korngrößenspektrum von etwa 80 bis 200 mm aufweisen. Durch ein Beaufschlagen der Rohstoff-Koksäule von unten, d. h. nach dem Gegenstromprinzip mit der für die Verbrennung benötigten Luft wird der Koks oberhalb des Ofenbodens abgebrannt. Im Bereich der Lufteinleitung erreicht die Ofentemperatur eine Höhe, bei der die Gesteine und die Zuschläge aufschmelzen. Hierbei erhöht der Anteil bereits glasig erstarrter Abfälle die Schmelzgeschwindigkeit. Nach oben hin sinkt die Temperatur im Ofen ab, da die Wärmeenergie an die Gesteine und den Primärenergieträger abgegeben wird. Gleichzeitig sinkt der Sauerstoffgehalt im Ofen.

Durch eine nachträgliche Erhitzung der Abluft werden schädliche Kohlenstoffverbindungen in weniger schädliche oder unschädliche Verbindungen umgewandelt.

Der Energieinhalt der Abluft wird anschließend mit Hilfe von Wärmetauschern an die Verbrennungsluft abgegeben.

Die in das Schmelzaggregat eingebrachten schmelzflüssigen Bestandteile der Rohstoffe sinken auf den Boden des Schmelzaggregates ab. Es kommt hierbei zu einer Saigerung, in der sich das vornehmlich aus den Gesteinen herausreduzierte Eisen am Boden sammelt und die zur Herstellung der Fasern benötigte, spezifisch leichtere Schmelze durch einen oberhalb des Bodens angeordneten Auslass ausgetragen wird. Die hier ausgetragene Schmelze wird anschließend einem Zerfaserungsaggregat zugeführt und zerfasert. Von der dem Zerfaserungsaggregat zugeführten Schmelze wird lediglich ein Anteil von 50% in Fasern umgewandelt. Die gröberen nichtfaserigen Bestandteile werden durch Windsichtung von den faserigen Bestandteilen getrennt.

Das sich im Bereich des Bodens ansammelnde Eisen muß regelmäßig abgelassen werden. Während des Ablassen des Eisens wird die Faserproduktion unterbrochen. Die zu diesem Zeitpunkt im Schmelzaggregat enthaltene Schmelze ist nach erneutem Anfahren des Schmelzaggregates nicht für die direkte Produktion von Dämmstoffen geeignet und wird demzufolge als Abfall im Zuge des Recyclings aufbereitet und der Produktion zugeführt.

Bei dem zumeist in Kupolöfen durchgeführten Schmelzvorgang besteht eine starke Abhängigkeit zwischen der Viskosität und der Temperatur. Ferner ist die Keimbildungszahl und somit die Neigung zur Kristallisation sehr hoch. Diese Eigenschaften führen bei der Bildung der Mineralfasern auf sogenannten Kaskaden-Spinnmaschinen zu relativ kurzen und in sich verwirbelten Mineralfasern. Die einzelnen Mineralfasern selbst sind glasig erstarrt. Aufgrund ihrer Zusammensetzung ist die Temperaturbeständigkeit der Mineralfasern aus einer Gesteinsschmelze höher als bei Dämmstoffen aus Glaswolle.

Von Bedeutung bei der Herstellung und Beurteilung von Mineralfasern ist die Biolöslichkeit, d.h. die Verweildauer der Mineralfasern im menschlichen Organismus.

Die Biolöslichkeit von Dämmstoffen aus Steinwolle wird durch den Gehalt von Al₂O₃ maßgeblich beeinflußt. Mit zunehmenden Anteilen Al₂O₃ steigt zum einen die Temperaturbeständigkeit der Fasern und zum anderen in überraschender Weise auch die Biolöslichkeit.

Eine typische Zusammensetzung von biolöslichen Mineralfasern aus Steinwolle weist einen Anteil von SiO₂ zwischen 35 und 43 Masse-%, einen Anteil Al₂O₃ von 17,5 bis 23,5 Masse-%, einen Anteil von TiO₂ von 0,1 bis 3 Masse-%, einen Anteil von FeO von 1,7 bis 9,3 Masse-%, einen Anteil CaO + MgO von 23,5 bis 32 Masse-% und einen Anteil von K₂O + Na₂O von 1,3 bis 7 Masse-% auf.

Für die Wirtschaftlichkeit der als Massenprodukt angewendeten Dämmstoffe aus Steinwolle ist der Einsatz von Rohstoffen bedeutsam, die einen hohen Anteil an Al₂O₃ aufweisen. Natürliche Gesteine enthalten zwar vielfach Alumosilikate, diese liegen aber häufig nicht in den erforderlichen Konzentrationen bzw. nur zusammen mit unerwünschten Mineralien vor. Calcinierte Bauxite sind demgegenüber relativ teuer. Aus diesem Grunde werden vielfach Reststoffe verwertet, die bisher häufig ausschließlich deponierfähig waren und die wegen des Gehaltes an löslichen Stoffen nicht unerhebliche Risiken für die Umwelt darstellen. Gleichzeitig werden diese Reststoffe, die beispielsweise bei der Steinwolle-Herstellung anfallen, in Form von Schmelzenresten, abgetrennten, nicht faserigen Partikeln, Filterstäuben, fehlerhaften Produktionen oder dergleichen in einem primären Reststoff-Kreislauf fast vollständig wiederverwertet. Diese Reststoffe werden vor ihrer Verwertung entsprechend den Anforderungen der maschinellen Einrichtung, insbesondere der Schmelzaggregate aufbereitet. Beispielsweise werden die Reststoffe zur Verwertung zerkleinert und in unterschiedlichen Korngrößen miteinander bzw. mit anderen splittigen Rohstoffen vermischt, mit Bindemitteln, wie beispielsweise Zement versetzt und zu ausreichend großen Formkörpern verpresst, bevor diese Formkörper als grobstückige Rohstoffe einem Schachtofen bzw. einem Kupolofen zugeführt werden. Aus der EP 0 765 295 C1 ist beispielsweise bekannt, geeignete Formkörper aus feinkörnigen Rohstoffen auch mit Hilfe von Lignin zu binden. In der WO 94/12007 werden entsprechende Formköper mit molassehaltigem Bindemittel beschrieben.

Wie bereits ausgeführt wird als Primärenergieträger Koks eingesetzt. Die für das Aufschmelzen der Rohstoffe erforderliche Primärenergie beträgt bis zu 2 Megawatt pro Tonne Schmelze. Je nach Herkunft der für die Verkokung verwendeten Kohle beträgt der Gehalt an anorganischen Bestandteilen des Kokses (Aschegehalt) zwischen 6 und 10 Masse-%. Die nichtbrennbaren Bestandteile des Kokses werden in die silikatische Schmelze eingebunden.

Aus der US 4 822 388 ist es bekannt, den Koks zumindest überwiegend durch eine Ofenauskleidung von Öfen für die Herstellung von Aluminium zu ersetzen. Hierbei wird ein vollständiger Ersatz des Kokses als erstrebenswert dargestellt, wobei aber zumindest 60 % des Primärenergieträgers aus den Rückständen der Ofenauskleidung bestehen soll.

Ausgehend von diesem Stand der Technik liegt der Erfindung die **Aufgabe** zugrunde, ein erfindungsgemäßes Verfahren derart weiterzuentwicklen, dass durch die Verwendung kostengünstiger Primärenergieträger ein preiswerteres Verfahren durchgeführt werden kann, welches gleichzeitig aber gute Schmelzresultate ohne Verunreinigungen der Schmelze erbringt.

Die **Lösung** dieser Aufgabenstellung sieht bei einem gattungsgemäßen Verfahren vor, dass als Primärenergieträger zumindest 50%, vorzugsweise bis zu 70% Koks, bezogen auf die Gesamtmenge des Primärenergieträgers und ein Gemenge aus einem Kohlenstoffträger und feuerfesten Steinen verwendet wird, das aus Ofenausbrüchen, insbesondere der kathodischen Auskleidung von Öfen für die Herstellung von Aluminium gewonnen wird.

Bei der Herstellung von Aluminium wird Aluminiumoxid unter Verwendung eines Flußmittels, beispielsweise Kryolith (Na₃AlF₆) in Elektrolyseöfen aufgeschmolzen und zu metallischem Aluminium reduziert. Der kathodische Teil der hierzu verwendeten Elektrolysezellen besteht aus einer Stahlwanne, die mit feuerfesten Steinen, beispielsweise Schamotte- und/oder Aluminiumoxid-Steinen ausgekleidet ist. Auf dieser keramischen Schicht ist ein Schicht elektrisch leitender Kohlenstoff- bzw. Graphitsteine und/oder -massen angeordnet.

Diese kathodische Auskleidung der Elektrolysezellen unterliegt ebenso wie die weiterhin verwendeten Anoden einem Verschleiß, der eine Revision durchschnittlich alle 5 Jahre erforderlich macht. Bei dieser Revision ist ein Abstellen der Elektrolyseöfen und eine Erneuerung der kathodischen Auskleidung erforderlich. Die verbrauchte Auskleidung besteht aus einem Gemenge, welches zur Hälfte aus Graphit und zur anderen Hälfte aus feuerfesten Steinen besteht. Eine vollständige Trennung dieser Bestandteile ist beim Ausbau nicht möglich, dennoch kann eine technisch sinnvolle Sortierung erfolgen.

Erfindungsgemäß hat es sich nun überraschend gezeigt, dass die verbrauchte kathodische Auskleidung eines Elektrolyseofens für die Aluminiumherstellung als Primärenergieträger in der Mineralwolleherstellung einsetzbar ist, wobei die kathodische Auskleidung den Primärenergieträger Koks vorzugsweise bis zu 50 % ersetzen kann.

Besonders vorteilhafte Ergebnisse lassen sich erzielen, wenn der Primärenergieträger zu 30 % aus Rückständen der kathodischen Auskleidung und zu 70 % aus Koks besteht. Durch den Einsatz von Rückständen der kathodischen Auskleidung als Teil des Primärenergieträgers können die Kosten für die Herstellung von Schmelzen in Herstellungsverfahren der Mineralwollindustrie deutlich reduziert werden.

Üblicherweise enthält die kohlenstoffreiche Fraktion der kathodischen Auskleidung, die vorzugsweise erfindungsgemäß verwendet wird, 40 bis 60 Masse-% Kohlenstoff sowie 4 bis 12 Masse-% SiO₂, 26 bis 56 Masse-% Al₂O₃, 6 bis 14 Masse-% FeO/Fe₂O₃, 21 bis 41 Masse-% Na₂O und 1,8 bis 3,6 Masse-% SO₃.

Vorzugsweise werden vor dem Einsatz der kathodischen Auskleidung als Teil des Primärenergieträgers ein Teil der enthaltenen Fluor-, Natrium- und/oder Aluminium-Gehalte zurückgewonnen, so dass diese Anteile in der Aluminiumherstellung erneut eingesetzt werden können.

Beim Einsatz der kathodischen Auskleidung als Teil des Primärenergieträgers werden die in der Auskleidung enthaltenen Cyanverbindungen während des Schmelzvorgangs zerstört und in weniger schädliche, zumindest nicht-toxische Stickstoffverbindungen umgewandelt. Hierbei entstehende Rückstände können somit wesentlich einfacher und damit kostengünstiger und umweltverträglicher entsorgt und deponiert werden.

Im bei der Herstellung der Schmelze entstehenden Rauchgas enthaltene Fluoride werden vorzugsweise aus dem Rauchgas herausgewaschen und in den Herstellungskreislauf eingespeist. Ein Teil der Fluoride sowie sonstige lösliche Verbindungen werden in der silikatischen Schmelze und somit in den Fasern gebunden.

Weitere Merkmale des erfindungsgemäßen Verfahrens bzw. der erfindungsgemäßen Schmelze ergeben sich aus den Unteransprüchen und der nachfolgenden Beschreibung eines bevorzugten Ausführungsbeispiels.

### Ausführungsbeispiel

Einem Kupolofen wird zur Erzeugung einer Schmelze ein grobstückiges Aufgabegut zugeführt, das jeweils zur Hälfte aus einem Primärenergieträger und Gesteinen als Rohstoff für eine silikatische Schmelze besteht. Die Gesteine enthalten 85% Kunststeine und 15% natürliche Steine, wie Diabas und Basalt. Die Kunststeine bestehen zu 60% aus Recyclingmaterial und zu 40% aus rückgebauten Mineralfaser-Dämmstoffen, wobei das Recyclingmaterial dem Produktionsprozeß in Form von Abschnitten bzw. qualitativ minderwertigen Produkten entnommen wird. Die Kunststeine werden aus feinkörnigem Material und den für die Kunststeine erforderlichen Feststoffen zusammen mit als Stützkom verwendeten Gesteinen mit latenthydraulischen Stoffen zu grobstückigen Körpern verpresst.

Der Primärenergieträger besteht zu 30% aus einem Gemenge aus einem Kohlenstoffträger und feuerfesten Steinen, das aus Ofenausbrüchen der kathodischen Auskleidung von Öfen für die Herstellung von Aluminium gewonnen wird und 70% Koks.

Das Gemenge weist eine Zusammensetzung aus 40 Masse-% Kohlenstoff, 4 Masse-% SiO₂, 26 Masse-% Al₂O₃, 6 Masse-% FeO/Fe₂O₃, 21 Masse-% Na₂O und 3 Masse-% SO₃ auf.

Der in dem Kupolofen angeordneten Säule aus Rohstoff und Primärenergieträger wird im Gegenstromprinzip die benötigte Verbrennungsluft zugeführt, so dass der Primärenergieträger oberhalb des Schachtbodens abbrennt. Im Bereich der Einleitung der Verbrennungsluft erreicht die Temperatur im Kupolofen Werte, die für das Aufschmelzen des Rohstoffs ausreichen.

Die aus dem Kupolofen abgeführte und einem Zerfaserungsaggregat zugeführte Schmelze besteht aus einem Anteil SiO₂ von 38 Masse-%, einem Anteil Al₂O₃ von 22 Masse-%, einem Anteil von TiO₂ von 2,6 Masse-%, einem Anteil von FeO von 3,4 Masse-%, einem Anteil CaO + MgO von 31,5 Masse-% und einen Anteil von K₂O + Na₂O von 2,5 Masse-%. Aus dieser Schmelze hergestellte Mineralfasern für Dämmstoffe sind als biolöslich klassifiziert.

## Patentansprüche

1. Verfahren zur Herstellung von Dämmstoffen aus Mineralfasern, insbesondere aus Glas- und/oder Steinwolle, bei dem in einem Schmelzaggregat, insbesondere einem Kupolofen eine silikatische Schmelze hergestellt und in einer Zerfaserungseinrichtung in vorzugsweise mikrofeine Fasern zerfasert wird, den Fasern vorzugsweise Binde- und/oder Imprägnierungsmittel zugesetzt werden und die Fasern auf einer Fördereinrichtung als Vlies abgelegt werden,
**dadurch gekennzeichnet,**
**dass** als Primärenergieträger zumindest 50%, vorzugsweise bis zu 70% Koks, bezogen auf die Gesamtmenge des Primärenergieträgers und ein Gemenge aus einem Kohlenstoffträger und feuerfesten Steinen verwendet wird, das aus Ofenausbrüchen, insbesondere der kathodischen Auskleidung von Öfen für die Herstellung von Aluminium gewonnen wird.

2. Verfahren nach Anspruch 1,
**dadurch gekennzeichnet,**
**dass** als feuerfeste Steine Schamotte- und/oder Aluminiumoxid-Steine verwendet werden.

3. Verfahren nach Anspruch 1,
**dadurch gekennzeichnet,**
**dass** das Gemenge mit Koks gemischt wird.

4. Verfahren nach Anspruch 1,
**dadurch gekennzeichnet,**
**dass** als Kohlenstoffträger Graphit verwendet wird.

5. Verfahren nach Anspruch 1,
**dadurch gekennzeichnet,**
**dass** als Kohlenstoffträger eine Fraktion verwendet wird, die 40 bis 60 Masse-% Kohlenstoff aufweist.

6. Verfahren nach Anspruch 1,
**dadurch gekennzeichnet,**
**dass** dem Gemenge in einem ersten Schritt vor der Aufgabe als Teil des Primärenergieträgers in das Schmelzaggregat Fluor, Natrium und /oder Aluminium entzogen wird, die vorzugsweise der Aluminiumgewinnung zugeführt werden.

7. Verfahren nach Anspruch 1,
**dadurch gekennzeichnet,**
**dass** zumindest das Gemenge als Teil des Primärenergieträgers vor Aufgabe in das Schmelzaggregat gebrochen wird.

8. Verfahren nach Anspruch 1,
**dadurch gekennzeichnet,**
**dass** in dem Primärenergieträger, insbesondere in dem Gemenge enthaltene Cyanverbindungen in nichttoxische Stickstoffverbindungen umgewandelt werden.

9. Verfahren nach Anspruch 1,
**dadurch gekennzeichnet,**
**dass** im Primärenergieträger, insbesondere in dem Gemenge enthaltene Fluoride überwiegend aus einem Rauchgas ausgewaschen und vorzugsweise in den Produktionskreislauf eingespeist werden.

10. Verfahren nach Anspruch 9,
**dadurch gekennzeichnet,**
**dass** im Primärenergieträger, insbesondere in dem Gemenge verbleibende Fluoride und/oder sonstige lösliche Verbindungen in der silikatischen Schmelze gebunden werden.

11. Verfahren nach Anspruch 1,
**dadurch gekennzeichnet,**
**dass** Rückstände des Primärenergieträgers, insbesondere in Form von getrocknetem feinkörnigen Schlamm als Sekundärheizmittel in das Schmelzaggregat eingebracht werden.

12. Verfahren nach Anspruch 11,
**dadurch gekennzeichnet,**
**dass** die Rückstände des Primärenergieträgers durch Windformen in das Schmelzaggregat, insbesondere den Kupolofen eingeblasen wird

13. Verfahren nach Anspruch 11,
**dadurch gekennzeichnet,**
**dass** die Rückstände des Primärenergieträgers in Formsteine für die Herstellung der Schmelze eingebunden werden.

## Claims

1. Method of manufacturing insulating materials from mineral fibres, particularly from glass and/or rock wool, said method including preparing in a melting unit, particularly in a cupola furnace, a silicate melt and defibring said silicate melt in a defibring unit to form preferably micro-fine fibres, and preferably adding to said fibres binding and/or impregnating agents, and depositing said fibres as a non-woven fabric on a conveyor means,
**characterized in**
**that** as a primary fuel there are used at least 50% and preferably up to 70% of coke, referred to the total amount of said primary fuel, and a mixture of a carbon carrier and refractory bricks, which mixture is obtained from furnace eruptions, particularly from the cathodic lining of furnaces for aluminium production.

2. Method according to claim 1,
**characterized in**
**that** as refractory bricks there are used chamotte and/or aluminium oxide bricks.

3. Method according to claim 1,
**characterized in**
**that** said mixture is mixed with coke.

4. Method according to claim 1,
**characterized in**
**that** graphite is used as a carbon carrier.

5. Method according to claim 1,
**characterized in**
**that** a fraction which comprises 40 to 60 % by weight of carbon is used as a carbon carrier.

6. Method according to claim 1,
**characterized in**
**that** in a first step before being added as a part of the primary fuel to the melting unit there are abstracted from said mixture fluorine, sodium and/or aluminium which are preferably supplied to aluminium production.

7. Method according to claim 1,
**characterized in**
**that** at least said mixture as a part of said primary fuel is broken before being supplied to the melting unit.

8. Method according to claim 1,
**characterized in**
**that** cyanogen compounds contained in said primary fuel, particularly in said mixture, are converted in non-toxic nitrogen compounds.

9. Method according to claim 1,
**characterized in**
**that** fluorides contained in said primary fuel, particularly in said mixture, are predominantly washed out from a smoke gas and are preferably fed to the production cycle.

10. Method according to claim 9,
**characterized in**
**that** fluoride and/or other soluble compounds remaining in said primary fuel, particularly in said mixture, are bound in said silicate melt.

11. Method according to claim 1,
**characterized in**
**that** residues of the primary fuel are fed to the melting unit as a secondary fuel, particularly in the form of dried fine-grained slurry.

12. Method according to claim 11,
**characterized in**
**that** the residues of the primary fuel are blown into the melting unit, particularly the cupola furnace, by wind forming.

13. Method according to claim 11,
**characterized in**
**that** the residues of the primary fuel are fixed-in in shaped blocks for the production of the melt.

## Revendications

1. Procédé de fabrication de matériaux isolants en fibres minérales, en particulier en laine de verre et/ou en laine de roche, pour lequel une masse de silicate fondu est produite dans un agrégat de fonte, en particulier dans un cubilot, et est défibrée en fibres de préférence microfines dans un dispositif de défibrage, de préférence des liants et/ou des substances d'imprégnation étant ajoutées aux fibres et les fibres étant déposées sur un dispositif de transport comme non-tissé,
**caractérisé en ce**
**que** l'on utilise comme source d'énergie primaire au moins 50%, de préférence jusqu'à 70% de coke, par rapport à la quantité totale de la source d'énergie primaire et un mélange d'un support de carbone et de briques réfractaires qui est obtenu à partir d'éclats de four, en particulier provenant du revêtement cathodique de fours pour la fabrication d'aluminium.

2. Procédé selon la revendication 1,
**caractérisé en ce**
**que** l'on utilise comme briques réfractaires des briques de chamotte et/ou des briques d'alumine.

3. Procédé selon la revendication 1,
**caractérisé en ce**
**que** le mélange est mélangé à du coke.

4. Procédé selon la revendication 1,
**caractérisé en ce**
**que** l'on utilise du graphite comme support de carbone.

5. Procédé selon la revendication 1,
**caractérisé en ce**
**qu'**une fraction qui présente 40 à 60% en masse de carbone est utilisée comme support de carbone.

6. Procédé selon la revendication 1,
**caractérisé en ce**
**que** du fluor, du sodium et/ou de l'aluminium est enlevé du mélange dans une première étape avant le chargement comme partie du support d'énergie primaire dans l'agrégat de fusion qui sont de préférence amenés à la production d'aluminium.

7. Procédé selon la revendication 1,
**caractérisé en ce**
**qu'**au moins le mélange comme partie du support d'énergie primaire est broyé avant chargement dans l'agrégat de fusion.

8. Procédé selon la revendication 1,
**caractérisé en ce**
**que** des composés de cyan contenus dans le support d'énergie primaire, en particulier dans le mélange, sont transformés en composés d'azote non toxiques.

9. Procédé selon la revendication 1,
**caractérisé en ce**
**que** des fluorures contenus dans le support d'énergie primaire, en particulier dans le mélange, sont enlevés par lavage principalement d'un gaz de fumée et sont de préférence alimentés dans le circuit de production.

10. Procédé selon la revendication 9,
**caractérisé en ce**
**que** des fluorures qui subsistent dans le support d'énergie primaire, en particulier dans le mélange, et/ou d'autres composés solubles sont liés dans la masse de silicate fondu.

11. Procédé selon la revendication 1,
**caractérisé en ce**
**que** des résidus du support d'énergie primaire sont amenés dans l'agrégat de fusion, en particulier sous forme de boue séchée à grains fins comme moyen de chauffage secondaire.

12. Procédé selon la revendication 11,
**caractérisé en ce**
**que** les résidus du support d'énergie primaire sont soufflés par formage de vent dans l'agrégat de fusion, en particulier dans le cubilot.

13. Procédé selon la revendication 11,
**caractérisé en ce**
**que** les résidus du support d'énergie primaire sont enliés dans des briques réfractaires pour la production de la masse fondue.
